(19) Europäisches Patentamt
European Patent Office
Office européen des brevets

(11) **EP 1 107 893 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **00949136.6**

(22) Anmeldetag: **27.06.2000**

(51) Int Cl.:
*B60T 8/00* (2006.01)   *B60D 1/30* (2006.01)
*B62D 37/00* (2006.01)   *B62D 7/15* (2006.01)
*B62D 6/04* (2006.01)

(86) Internationale Anmeldenummer:
**PCT/DE2000/002091**

(87) Internationale Veröffentlichungsnummer:
**WO 2001/002227 (11.01.2001 Gazette 2001/02)**

(54) **VERFAHREN UND EINRICHTUNG ZUM STABILISIEREN EINES FAHRZEUGS**

METHOD AND DEVICE FOR STABILIZING A VEHICLE

PROCEDE ET DISPOSITIF POUR STABILISER UN VEHICULE

(84) Benannte Vertragsstaaten:
**DE ES FR IT NL SE**

(30) Priorität: **30.06.1999 DE 19929830**
**30.12.1999 DE 19964048**

(43) Veröffentlichungstag der Anmeldung:
**20.06.2001 Patentblatt 2001/25**

(73) Patentinhaber: **ROBERT BOSCH GMBH**
**70442 Stuttgart (DE)**

(72) Erfinder:
• **RUPP, Peter**
**D-71711 Steinheim (DE)**
• **ZOEBELE, Andreas**
**D-71706 Markgroeningen (DE)**

(56) Entgegenhaltungen:
**EP-A2- 0 433 858     EP-A2- 0 989 049**
**DE-C1- 4 127 750     GB-A- 2 257 403**
**JP-A- 10 236 289**

**EP 1 107 893 B1**

**Beschreibung**

Die Erfindung betrifft ein Verfahren und eine Einrichtung zum Stabilisieren eines Straßenfahrzeugs, insbesondere eines Personenkraftwagens, mit einem durch das Straßenfahrzeug gezogenen Anhänger. Bei Straßenfahrzeugen mit Anhängern kann es bedingt durch überhöhte Geschwindigkeit, schlechte Straßenverhältnisse, Seitenwind oder ähnlichem zum Schlingern des Gespanns aus Straßenfahrzeug und Anhänger kommen. Zwar offenbaren zum Beispiel der Artikel "FDR - die Fahrdynamikreglung von Bosch", von A. van Zanten, R. Erhardt und G. Pfaff, ATZ Automobiltechnische Zeitschrift 96 (1994) 11 Seiten 674 bis 689 und das SAE-Paper 973184 "Vehicle Dynamics Controler for Commercial Vehicles" von F. Hecker, S. Hummel, O. Jundt, K.-D. Leimbach, I. Faye, H. Schramm, sehr erfolgreiche Lösungen zur Stabilisierung der Fahrdynamik von Fahrzeugen und Sattelschleppern, doch ergeben sich beim Ziehen von Anhängern, insbesondere Anhängern, die keine eigene Aktorik bzw. Sensorik zur Fahrdynamikstabilisierung aufweisen, besondere Schwierigkeiten. Dies gilt insbesondere bei verglichen mit dem Zugfahrzeug schweren Anhängern. So treten z.B. bei Personenkraftwagen, die Wohnanhänger ziehen, besondere Stabilitätsprobleme auf.

Kommt es bei einem Fahrzeuggespann aus Kraftfahrzeug und Anhänger zu einer Schlingerbewegung bzw. zu Pendelbewegungen, so schwingt der Anhänger um seine Hochachse und regt über die Anhängerkupplung auch das Zugfahrzeug zur Schwingung an. Liegt die Fahrzeuggeschwindigkeit unter einer sogenannten kritischen Geschwindigkeit, so sind die Schwingungen gedämpft. Ist die Fahrzeuggeschwindigkeit gleich einer kritischen Geschwindigkeit, so sind Schwingungen ungedämpft, liegt die Fahrzeuggeschwindigkeit oberhalb einer kritischen Geschwindigkeit, so klingen die Schwingungen auf. Der Wert der kritischen Geschwindigkeit hängt unter anderem von Geometriedaten wie Radstand und Deichsellänge, von der Masse und dem Gierträgheitsmoment des Fahrzeugs und des Anhängers und von den Schräglaufsteifigkeiten der Achsen ab. Dieser Wert bewegt sich bei Fahrzeuggespannen im PKW-Bereich typischerweise im Bereich von 90 bis 130 km/h. Die Frequenz der Schlingerbewegung bzw. der Pendelbewegung beträgt ungefähr 0,5 bis 1,5 Hz.

Aus der DE 41 27 750 C1 ist eine Vorrichtung zur Erhöhung der Pendelstabilität von Fahrzeuggespannen bekannt. Das vordere bzw. ziehende Fahrzeug besitzt dazu eine selbsttätige Zusatzlenkung, welche auf den Knickwinkel zwischen den Fahrzeugen bzw. die Knickwinkeländerungsgeschwindigkeit reagiert und automatisch Gegensteuermanöver ausführt, wenn das hintere Fahrzeug bzw. der Anhänger unerwünschte Pendelbewegungen ausführt.

Entsprechend ist es Aufgabe der Erfindung ein Verfahren bzw. Einrichtung anzugeben, mittels der die Fahrstabilität bei Straßenfahrzeugen, die einen Anhänger ziehen, verbessert wird. Es ist besonders wünschenswert, daß die erfindungsgemäße Lösung mit geringem Aufwand an Sensorik auskommt.

Diese Aufgabe wird durch ein Verfahren gemäß Anspruch 1 und eine Einrichtung gemäß Anspruch 12 gelöst. Dabei wird zum Stabilisieren eines Straßenfahrzeugs, insbesondere eines Personenkraftwagens, mit einem durch das Straßenfahrzeug gezogenen Anhänger das Straßenfahrzeug in bezug auf Schlingerbewegungen überwacht und dem Straßenfahrzeug beim Erkennen einer Schlingerbewegung automatisch ein im wesentlichen periodisches Giermoment, insbesondere zumindest zwei Perioden lang, eingeprägt, das der Schlingerbewegung im wesentlichen gegenphasig ist. Auf diese Weise ist es möglich, ein Schlingern des Gespanns aus Straßenfahrzeug und Anhänger zu vermindern und das Gespann zu stabilisieren. Unter Schlingern ist dabei zu verstehen, daß es im Straßenfahrzeug, das den Anhänger zieht zu einer im wesentlichen periodischen Querbeschleunigung sowie zu einer im wesentlichen periodischen Giergeschwindigkeit kommt. Es handelt sich dabei nicht um eine streng periodische Pendelerscheinung (das Fahrzeuggespann stellt kein ideales Pendel dar), vielmehr können zeitliche Schwankungen in der Periodendauer der Pendelbewegung des Anhängers bzw. Aufliegers auftreten. Diese finden sich beispielsweise in dem von einem Querbeschleunigungssensor erzeugten sich wiederholenden bzw. wiederkehrenden bzw. im wesentlichen periodischen Signal wieder. D. h. dieses Signal weist eine sich in kleinen Grenzen ändernde Periodendauer auf, die idealerweise jedoch als zeitlich konstant anzusehen ist. Entsprechend ist auch das eingeprägte, im wesentliche periodische Giermoment nicht streng periodisch. Entsprechend den Schwankungen in der Periode der Pendelbewegung des Fahrzeuggespanns wird auch die Periodendauer im eingeprägten Giermoment verändert.

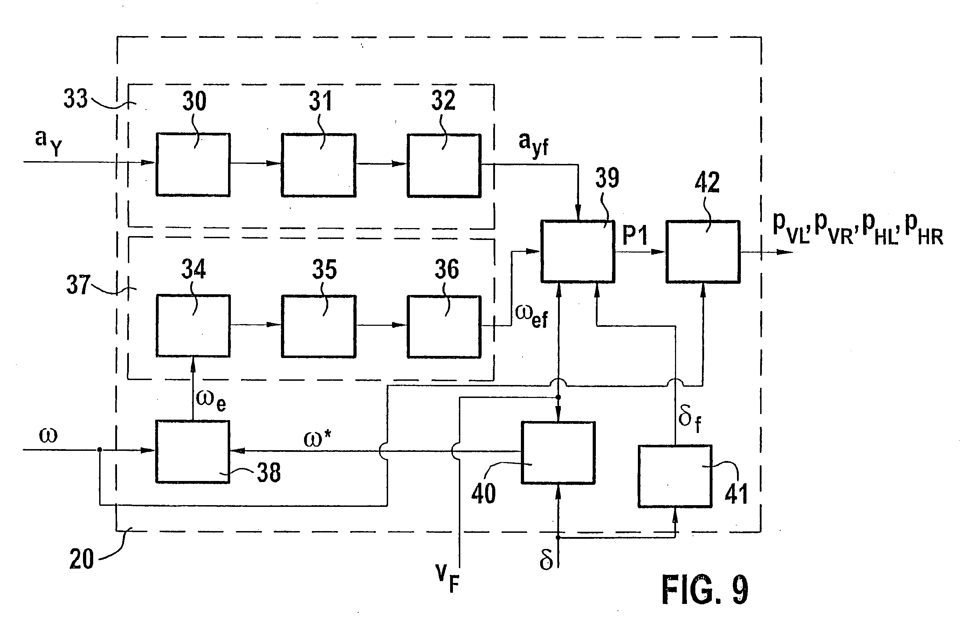

Zur Erkennung einer Schlingerbewegung kann z.B. vorgesehen werden, die Querbeschleunigung des Straßenfahrzeugs mit einem Querbeschleunigungssensor zu messen. Zur Erkennung des Schlingerns werden die Frequenz und die Amplitude des mittels des Querbeschleunigungssensors ermittelten Signals ausgewertet. Die Frequenz ergibt sich dabei z.B. aus dem zeitlichen Abstand aufeinanderfolgender Null-Durchgänge. Ein Schlingern liegt z.B. dann vor, wenn die so ermittelte Frequenz innerhalb eines vorbestimmten Frequenzbandes liegt und wenn die Amplitude größer ist als ein Schwellenwert. In diesem Zusammenhang ist es vorteilhaft zusätzlich zu der Querbeschleunigung die Geschwindigkeit und/oder den Lenkwinkel des Fahrzeugs zu betrachten um ein Schlingern von Lenkbewegungen des Fahrzeugs zu unterscheiden. Ein Beispiel für eine Schlingererkennung ist in Fig. 9 ausgeführt.

Besonders vorteilhaft ist es in Verbindung mit der Erfindung, eine Schlingererkennung einzusetzen, bei der zumindest eine Querdynamikgröße, wie etwa die Querbeschleunigung, die Giergeschwindigkeit oder die Gierbeschleunigung, sowie die Geschwindigkeit des Fahrzeugs ermittelt wird, wobei die Schlingerbewegung in Abhängigkeit der zumindest einen Querdynamikgröße und der Geschwindigkeit bestimmt wird. Dies erfolgt vorteilhafterweise dadurch, daß überprüft wird, ob die Querdynamikgröße und die Geschwindigkeit je größer sind als ihnen zugeordnete Schwellenwerte. Es ist besonders vorteilhaft sowohl die Querbeschleunigung als auch die Giergeschwindigkeit zu messen. Weiterhin ist es zur Ermittlung einer Schlingerbewegung von Vorteil, den Lenkwinkel zu messen und schnelle Lenkbewegungen bei der Bestimmung der Schlingerbewegungen zu berücksichtigen. Dazu wird vorteilhafterweise ein Hochpaßfilter vorgesehen, mittels dessen ein dem Lenkwinkel entsprechendes Signal gefiltert wird. Ist dieses hochpaßgefilterte Lenksignal größer als ein bestimmter Schwellenwert, so wird vorteilhafterweise davon ausgegangen, daß keine Schlingerbewegung vorliegt.

Gemäß der Erfindung erfolgt das Einprägen des Giermoments dadurch, dass auf beiden Seiten des Straßenfahrzeugs unterschiedliche Bremskräfte eingeprägt werden. Auf diese Weise wird das periodische Giermoment in besonders vorteilhafter Weise ohne die Notwendigkeit von Lenkbewegungen eingeprägt. Zudem ist es gemäß dieser Ausgestaltung möglich, die Erfindung besonders günstig bei mit ABS ausgerüsteten Fahrzeugen zu implementieren, auch wenn diese keine Fahrdynamikregelung (FDR, ESP) aufweisen.

In weiterhin vorteilhafter Ausgestaltung der Erfindung erfolgt das Einprägen des im wesentlichen periodischen Giermoments durch automatisches einseitiges Abbremsen des Fahrzeugs. Auf diese Weise wird eine besonders gute Stabilisierung des Gespanns aus Straßenfahrzeug und Anhänger erreicht.

In weiterhin vorteilhafter Ausgestaltung der Erfindung wird das Straßenfahrzeug auf Instabilität überwacht und es erfolgt ein Einprägungen des Giermoments nur dann, wenn keine Instabilität des Straßenfahrzeugs erkannt wird.

In weiterhin vorteilhafter Ausgestaltung der Erfindung weist der Anhänger eine Auflaufbremse auf. Nach und/oder zusätzlich zum Einprägen des im wesentlichen periodischen Giermoments wird das Straßenfahrzeug automatisch kurzzeitig derart abgebremst, daß die Auflaufbremse des Anhängers ausgelöst wird.

In weiterhin vorteilhafter Ausgestaltung der Erfindung erfolgt das kurzzeitige automatische Abbremsen des Straßenfahrzeugs um eine feste Phase versetzt vom Nulldurchgang der Schlingerbewegung. Dies berücksichtigt insbesondere die Trägheit des Anhängers. Die Bremsung erfolgt entweder um eine gewisse feste Phase kurz vor einem Nulldurchgang oder danach.

Für den Fall, daß die Trägheit des Anhängers vernachlässigbar ist, kann das kurzzeitige automatische Abbremsen des Straßenfahrzeugs auch in einem Nulldurchgang der Schlingerbewegung erfolgen.

In weiterhin vorteilhafter Ausgestaltung der Erfindung erfolgt das kurzzeitige automatische Abbremsen des Straßenfahrzeugs nur dann, wenn das Einprägen des im wesentlichen periodischen Giermoments zuvor zu einer Verringerung der Schlingerbewegung geführt hat.

In weiterhin vorteilhafter Ausgestaltung der Erfindung erfolgt das automatische kurzzeitige Abbremsen zum Auslösen der Auflaufbremse des Anhängers durch Verringerung des Antriebsmomentes eines das Straßenfahrzeug antreibenden Motors.

In weiterhin vorteilhafter Ausgestaltung der Erfindung wird das Straßenfahrzeug automatisch kurzzeitig beschleunigt.

Die Erfindung kommt besonders vorteilhaft im Zusammenhang mit hydraulischen Bremsanlagen zum Einsatz. Sie ist jedoch auch in elektrohydraulischen oder in pneumatischen bzw. elektropneumatischen oder in elektromechanischen Bremsanlagen einsetzbar.

Die Erfindung hat unter anderem folgende Vorteile:

- Das erfindungsgemäße Vorgehen wirkt auf das Zugfahrzeug und ist somit vom jeweiligen Anhänger unabhängig. Entsprechend ist in vorteilhafter Ausgestaltung der Erfindung keine zusätzlicher Sensorik bzw. Aktorik auf dem Anhänger implementiert.

- Das erfindungsgemäße Vorgehen kann auf die Sensorik, die von Bremsschlupfreglern (ABS), Antriebsschlupfreglern (ASR) bzw. Fahrdynamikreglern (FDR) bereitgestellt wird, zurückgreifen. Für gewöhnlich ist keine weitere Sensorik erforderlich.

- Die Schlingerfrequenz kann gelernt werden, d. h. die Schlingererkennung adaptiert sich selbständig an das jeweilige Fahrzeug.

- Bei Einsatz des erfindungsgemäßen Verfahrens bzw. der erfindungsgemäßen Vorrichtung kann auf eine mechanische Vorrichtung an der Anhängerkupplung zur Erkennung der Schlingerauslenkung verzichtet werden.

Weitere Vorteile und Einzelheiten ergeben sich aus nachfolgender Beschreibung von Ausführungsbeispielen. Im Einzelnen zeigen:

Fig.1 ein Gespann aus einem Straßenfahrzeug und einem Anhänger,

Fig.2 die Auslenkung der Anhängerkupplung des Straßenfahrzeugs bei Schlingern des Gespanns,

Fig.3 Querbeschleunigung und Giergeschwindigkeit des Straßenfahrzeugs bei Schlingern des Gespanns,

Fig.4 die Geschwindigkeiten des linken und rechten Hinterrades des Straßenfahrzeugs bei Schlingern des Gespanns,

Fig.5 eine beispielhafte erfindungsgemäße Einstellung des Bremsdrucks am rechten Hinterrad des Straßenfahrzeugs,

Fig.6 eine beispielhafte erfindungsgemäße Einstellung des Bremsdrucks am linken Hinterrad des Straßenfahrzeugs,

Fig.7    ein Ausführungsbeispiel für eine Stabilisierungseinrichtung,

Fig.8    ein besonders vorteilhaftes Ausführungsbeispiel zum Stabilisieren eines Gespanns aus einem Fahrzeug und einem Anhänger und

Fig.9    den inneren Aufbau einer Stabilisierungseinrichtung

Fig.10   den inneren Aufbau eines Bremsdruckberechners aus Fig.9

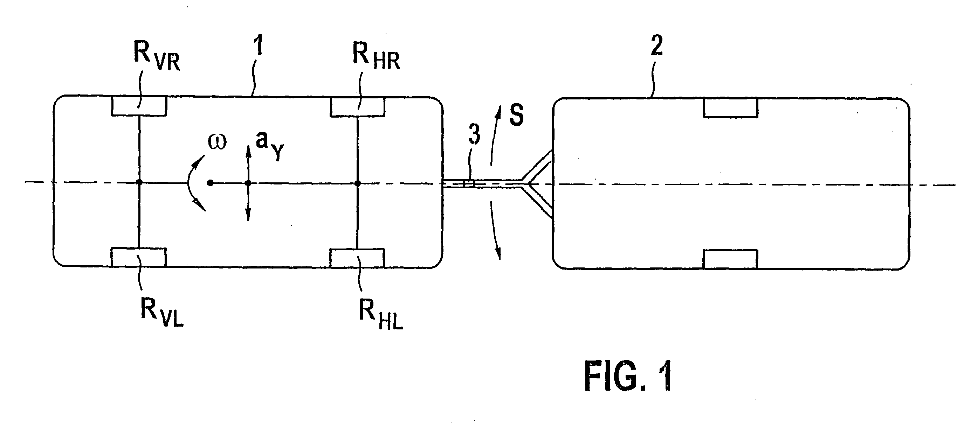

Fig. 1 zeigt ein Gespann aus einem Straßenfahrzeug 1 und einem Anhänger 2, wobei der Anhänger 2 an eine Anhängerkupplung 3 des Straßenfahrzeugs angehängt ist. $R_{VR}$ bezeichnet das rechte Vorderrad, $R_{VL}$ das linke Vorderrad, $R_{HR}$ das rechte Hinterrad und $R_{HL}$ das linke Hinterrad des Straßenfahrzeugs 1. ω Bezeichnet die Giergeschwindigkeit des Straßenfahrzeugs und $a_Y$ die Querbeschleunigung des Straßenfahrzeugs 1. S bezeichnet die Auslenkung der Anhängerkupplung des Straßenfahrzeugs 1.

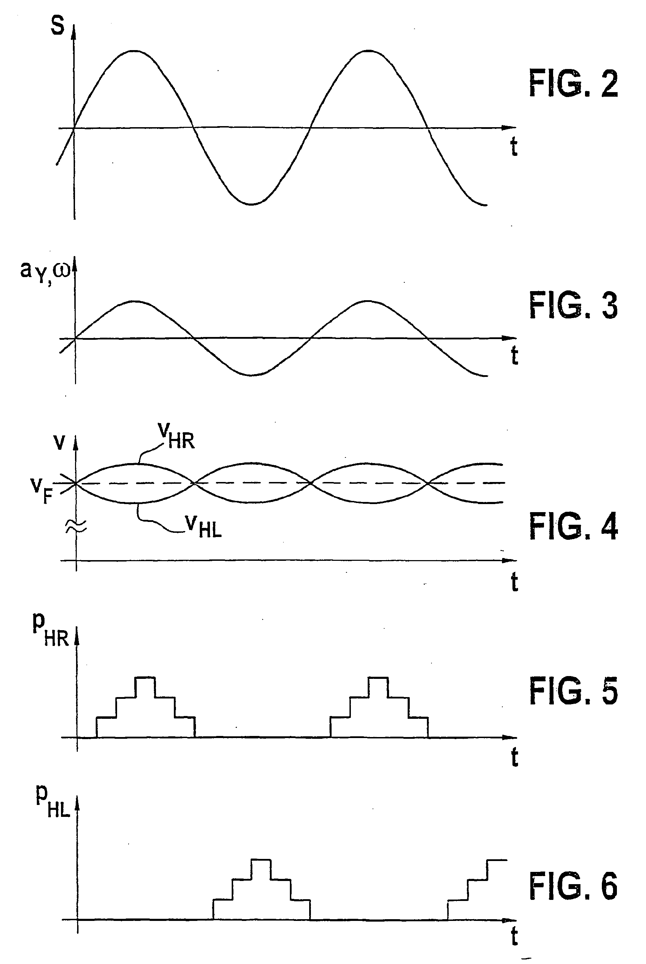

In Fig. 2 ist die Auslenkung S der Anhängerkupplung 3 des Straßenfahrzeugs beim Schlingern des Straßenfahrzeugs über die Zeit t dargestellt. Dabei entsprechen positive Werte der Auslenkung S eine Auslenkung nach rechts und negative Werte der Auslenkung S eine Auslenkung nach links.

In Fig. 3 ist ein beispielhafter Verlauf der der Schlingerbewegung in Fig. 2 entsprechenden Querbeschleunigung $a_Y$ und der der Schlingerbewegung in Fig. 2 entsprechenden Giergeschwindigkeit ω dargestellt.

Beim Schlingern weichen die Geschwindigkeiten der einzelnen Räder des Fahrzeugs 1 vom Verlauf ihrer mittleren Geschwindigkeit, die im wesentlichem der Fahrzeuggeschwindigkeit $v_F$ entspricht, ab. Dies ist in Fig. 4 beispielhaft für die Geschwindigkeit $V_{HR}$ des rechten Hinterrades $R_{HR}$ und die Geschwindigkeit $V_{HL}$ des linken Hinterrades $R_{HL}$ dargestellt. Erfindungsgemäß ist vorgesehen, daß das Straßenfahrzeug 1 in Bezug auf Schlingerbewegungen überwacht wird und daß dem Straßenfahrzeug beim Schlingern automatisch ein Giermoment eingeprägt wird, das der Schlingerbewegung im wesentlichen gegenphasig ist. Dabei erfolgt das Einprägen des Giermoments in besonders vorteilhafter Weise durch automatisches einseitiges Abbremsen, insbesondere im wesentlichen der Hinterräder, des Fahrzeugs.

Fig. 5 und Fig. 6 zeigen die Bremsdrücke $p_{HR}$ am rechten Hinterrad $R_{HR}$ und $p_{HL}$ am linken Hinterrad $R_{HL}$ zum Einprägen eines gegenphasigen (im wesentlichen periodischen) Giermoments durch automatisches einseitiges Abbremsen des Fahrzeugs 1 in beispielhafter Ausgestaltung. Wie Fig. 5 und 6 zeigen, sind die Bremsdrücke $P_{HR}$ und $P_{HR}$ gegenphasig und erzeugen gemäß der dargestellten Ansteuerung ein zur Schlingerbewegung des Gespanns gegenphasiges Giermoment.

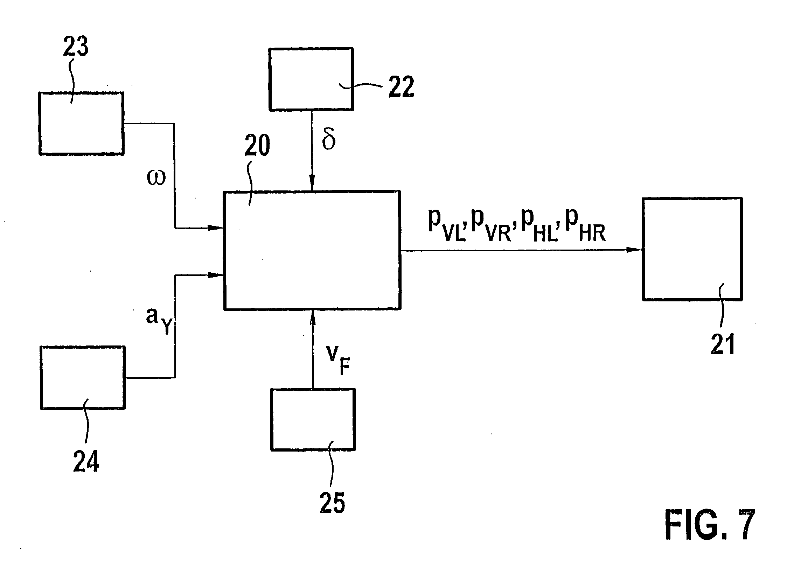

Fig. 7 zeigt ein Ausführungsbeispiel einer erfindungsgemäßen Stabilisierungseinrichtung 20. Die Stabilisierungseinrichtung 20 ist mit einem Lenkwinkelsensor 22 zur Messung des Lenkwinkels δ, einem Giergeschwindigkeits-Sensor 23 zur Messung der Giergeschwindigkeit ω des Straßenfahrzeugs 1, einem Querbeschleunigungssensor 24 zur Messung der Querbeschleunigung $a_Y$ des Straßenfahrzeugs 1 sowie einem Geschwindigkeitssensor 25 zur Messung der Fahrzeuggeschwindigkeit $v_F$ verbunden. In vorteilhafter Ausgestaltung ist vorgesehen, daß das Straßenfahrzeug 1 eine Fahrzeugdynamikregelung aufweist, wie sie z.B. in dem Artikel "FDR - die Fahrdynamikreglung von Bosch", von A. van Zanten, R. Erhardt und G. Pfaff, ATZ Automobiltechnische Zeitschrift 96 (1994) 11 Seiten 674 bis 689, offenbart ist. In diesem Fall wird die Fahrzeuggeschwindigkeit $v_F$ nicht von dem Fahrzeuggeschwindigkeitssensor 25 geliefert, sondern von der Fahrdynamikregelung.

Die Ausgangsgrößen der Stabilisierungseinrichtung 20 sind z.B. die Bremsdrücke $p_{VL}$, $p_{VR}$, $p_{HL}$, $p_{HL}$ für die Räder $R_{VR}$, $R_{VL}$, $R_{HR}$, $R_{HL}$ des Straßenfahrzeugs 1 bzw. entsprechende Stellgrößen, die die Einstellung der Bremsdrücke $p_{VL}$, $p_{VR}$, $p_{HL}$, $p_{HL}$ in der Bremse 21 des Straßenfahrzeugs 1 bewirken.

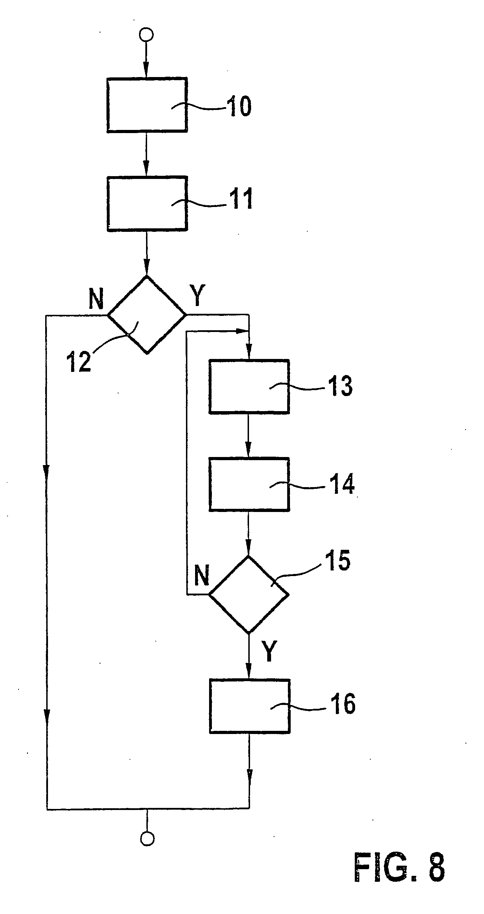

Fig. 8 zeigt ein besonders vorteilhaftes Ausführungsbeispiel zum Stabilisieren eines Gespanns aus einem Fahrzeug und einem Anhänger unter Anwendung des erfindungsgemäßen Prinzips. In einem ersten Schritt 10 werden Meßwerte der Sensoren am Fahrzeug 1, die Fig. 7 zeigt, eingelesen. In einem zweiten Schritt 11 werden die allgemeinen Bewegungsgleichungen des Straßenfahrzeugs ohne Anhänger berechnet. Die Berechnungen gemäß Schritt 11 sind in Fig. 9 näher erläutert.

Die Bewegungsgleichungen entsprechen mathematischen Beziehungen, die unter Zugrundelegung einfacher mathematischer Modelle die Fahrzeugbewegung beschreiben. An dieser Stelle sei beispielsweise auf den Artikel "FDR - Die Fahrdynamikregelung von Bosch" von A. van Zanten, R. Erhardt und G. Pfaff, ATZ Automobiltechnische Zeitschrift 96 (1994) 11 Seiten 674 bis 689 verwiesen. Die in diesem Artikel enthaltene Gleichung 4, die auch als Ackermann-Beziehung bezeichnet wird, stellt solch eine Bewegungsgleichung dar.

In einem Entscheidungsblock 12 wird überprüft, ob eine Querbeschleunigung bzw. eine Giergeschwindigkeit am Fahrzeug vorliegt, die nicht auf eine Lenkbewegung des Fahrers zurückgeht. Ist diese Bedingung nicht erfüllt, so wird nicht im Rahmen der erfindungsgemäßen Fahrzeugstabilisierung eingegriffen. Unberührt davon bleiben jedoch weitere mögliche Verfahren zur Fahrzeugstabilisierung z.B. bedingt durch eine obenbezeichnete Fahrdynamikregelung. Wird dagegen ein Schlingern des Straßenfahrzeugs 1 bzw. ein Schlingern des Hecks des Straßenfahrzeugs 1 dedektiert, ohne daß das Straßenfahrzeug 1 instabil ist, so werden in einem nächsten Schritt 13 Frequenz und Phase der Schlingerbewegung ermittelt. Das heißt, in diesem Fall sind zur Stabilisierung des Fahrzeuggespanns erfindungsgemäße Eingriffe erforderlich.

Nach Bestimmung von Frequenz und Phase der Schlingerfrequenz wird in einem nächsten Schritt 14 dem Straßenfahrzeug 1 ein der Schlingerbewegung gegenphasiges Giermoment eingeprägt. Dies erfolgt vorteilhafterweise dadurch, daß auf beiden Seiten des Straßenfahrzeugs 1 unterschiedliche Bremskräfte eingeprägt werden, wobei das Einprägen des Giermoments vorteilhafterweise durch einseitiges Abbremsen des Straßenfahrzeugs 1 erfolgt, wie dies in Fig. 5 und 6 beispielhaft dargestellt ist.

In vorteilhafter beispielhafter Ausgestaltung sind zusätzlich ein weiterer Entscheidungsblock 15 und ein weiterer Schritt 16 vorgesehen. Mit dem Entscheidungsblock 15 wird überprüft, ob es durch das Einprägen eines im wesentlichen gegenphasigen Giermoments (vergleiche Schritt 14) zu einer Verringerung der Schlingerbewegung gekommen ist. Ist dies nicht der Fall, so folgt Schritt 13. Führt das Einprägen des im wesentlichen gegenphasigen Giermoments jedoch zu einer Verringerung der Schlingerbewegung des Gespanns aus Straßenfahrzeug 1 und Anhänger 2, so wird das Straßenfahrzeug 1 automatisch kurzzeitig abgebremst (Schritt 16), so daß die Auflaufbremse des Anhängers 2 ausgelöst wird. Dieser Bremsvorgang erfolgt vorteilhafterweise im wesentlichen um eine feste Phase versetzt vom Null-Durchgang der Schlingerbewegung.

In vorteilhafter Ausgestaltung der Erfindung ist dabei vorgesehen, daß die Geschwindigkeit des Gespanns so weit reduziert wird, daß diese unter eine kritische Geschwindigkeit sinkt.

Fig. 9 zeigt den inneren Aufbau einer Stabilisierungseinrichtung 20 in beispielhafter Ausgestaltung. Bezugszeichen 40 bezeichnet dabei einen Soll-Giergeschwindigkeits-Berechner zur Berechnung einer Soll-Giergeschwindigkeit $\omega^*$. Die Berechnung der Soll-Giergeschwindigkeit $\omega^*$ erfolgt dabei z.B. gemäß der Soll-Giergeschwindigkeits-Berechnung, wie sie in dem Artikel "FDR - die Fahrdynamikreglung von Bosch", von A. van Zanten, R. Erhardt und G. Pfaff, ATZ Automobiltechnische Zeitschrift 96 (1994) 11 Seiten 674 bis 689 offenbart ist. Alternativ dazu kann vorgesehen werden, daß, wenn das Straßenfahrzeug 1 eine oben bezeichnete Fahrdynamikregelung aufweist, die Stabilisierungseinrichtung 20 die Soll-Giergeschwindigkeit $\omega^*$ nicht selbst berechnet, sondern von der Fahrdynamikregelung erhält.

Die Bewegungsgleichungen entsprechen mathematischen Beziehungen, die unter Zugrundelegungen einfacher mathematischer Modelle die Fahrzeugbewegung beschreiben. An dieser Stelle sei beispielsweise auf den Artikel "FDR - Die Fahrdynamikregelung von Bosch" von A. van Zanten, R. Erhardt und G. Pfaff, ATZ Automobiltechnische Zeitschrift 96 (1994) 11 Seiten 674 bis 689 verwiesen. Die in diesem Artikel enthaltene Gleichung 4, die auch als Ackermann-Beziehung bezeichnet wird, stellt solch eine Bewegungsgleichung dar (s. o.). Mittels des Soll-Giergeschwindigkeits-Berechner wird in Abhängigkeit der Fahrzeuggeschwindigkeit und des Lenkwinkels ein Sollwert für die Giergeschwindigkeit des Fahrzeugs ermittelt. D. h. die Berechnung der Soll-Giergeschwindigkeit erfolgt mit Hilfe einer Bewegungsgleichung.

In entsprechender Weise kann auch eine Bewegungsgleichung ausgewertet werden, mit der die Querbeschleunigung des Fahrzeuges berechnet wird. In diesem Fall würde der so ermittelte Sollwert für die Querbeschleunigung mit dem gemessenen Wert für die Querbeschleunigung verglichen.

Die Soll-Giergeschwindigkeit $\omega^*$ ist zusammen mit der Giergeschwindigkeit $\omega$ Eingangsgröße in einem Differenzbildner 38, der eine Giergeschwindigkeits-Regelabweichung $\omega_e$ als Differenz der Soll-Giergeschwindigkeit $\omega^*$ und der Giergeschwindigkeit $\omega$ berechnet. Die Giergeschwindigkeits-Regelabweichung $\omega_e$ wird mittels eines Filters 37 gefiltert. Das Filter 37 weist ein Bandpaßfilter 34, einen Betragsbildner 35 sowie einen Mittelwertbildner 36 auf. Der Mittelwertbildner 36 ist vorteilhaftweiser als Tiefpaßfilter ausgeführt. Das Bandpaßfilters 34 ist derart ausgebildet, daß es nur Anteile der Giergeschwindigkeits-Regelungsabweichung $\omega_e$ durchläßt, die in einem Frequenzbereich liegen, der für die Pendelbewegung des Straßenfahrzeugs 1 charakteristisch ist. Dabei ist das Bandpaßfilter in vorteilhafterweise derart ausgebildet, daß es nur im Frequenzbereich zwischen 0,5 und 1,5 Hz durchgängig ist. Das Ausgangssignal des Filters 37 ist mit $\omega_{ef}$ bezeichnet.

In gleicher Weise wie die Giergeschwindigkeits-Regelabweichung $\omega_e$ wird auf die Querbeschleunigung $a_y$ gefiltert. Dazu weist die Stabilisierungseinrichtung 20 ein Filter 33 auf. Das Filter 33 ist entsprechend dem Filter 37 aufgebaut. Es weist ein Bandpaßfilter 30 auf, das mit dem Bandpaßfilter 34 identisch ist. Das Filter 33 weist ferner einen Betragsbildner 31 auf, der dem Betragsbildner 35 identisch ist. Weiterhin weist das Filter 33 einen Mittelwertbildner 32 auf, der mit dem Mittelwertbildner 36 identisch ist. Ausgangssignal des Filters 33 ist ein mit $a_{yf}$ bezeichnetes Signal.

In vorteilhafter Ausgestaltung der Erfindung ist vorgesehen, daß die Schlingerfrequenz gelernt wird, d.h., daß sich die Schlingererkennung selbständig an das jeweilige Fahrzeuggespann adaptiert. Dazu ist in vorteilhafter Ausgestaltung vorgesehen, daß die Bandpaßfilter 30 bzw. 34 auf die Schlingerfrequenz des Fahrzeuggespanns eingestellt werden. Die verschiedenen Filterkenngrößen, beispielsweise die Grenzfrequenzen der Bandpaßfilter, passen sich an das jeweilige Fahrzeuggespann automatisch bzw. selbstständig an.

Die Stabilisierungseinrichtung 20 weist einen Lenkwinkelbewerter 41 auf. Der Lenkwinkelbewerter 41 weist eine Todzone zum Ausblenden kleiner Lenkwinkel $\delta$, ein Hochpaßfilter zum Ausblenden langsam verlaufender Lenkwinkeländerungen sowie einen Integrator zum Integrieren des hochpaß-gefilterten Lenkwinkels auf. Die Ausgangsgröße des Lenkwinkelbewerters 41 ist mit $\delta_f$ bezeichnet.

Die in dem Filtern 33 und 37, im Differenzbildner 38, im Soll-Giergeschwindigkeits-Berechner 40 und im Lenkwinkelbewerter 41 ablaufenden Berechnungen sind dem Schritt 11 in Fig. 8 zuzuordnen.

Mittels eines Schlingerdetektors 39, der im wesentlichen ein Ausführungsbeispiel für den Entscheidungsblock 12 des Ablaufplans gemäß Fig. 8 darstellt, wird entschieden, ob eine Schlingerbewegung vorliegt oder nicht. Dazu wird gemäß vorliegenden Ausführungsbeispiel geprüft, ob folgende Bedingungen erfüllt sind:

$$\delta_F < S1$$

$$a_{yf} > S2$$

$$\omega_{ef} > S3$$

$$v_F > S4$$

wobei S1 S2, S3 und S4 Schwellwerte sind. Die Überprüfung bezüglich des Schwellwertes S4 kann auch weggelassen werden. Ausgangsgröße des Schlingerdetektors 39 ist eine binäre Größe P1 die den Wert 0 annimmt, wenn Schlingern verneint wird und den Wert 1, wenn oben bezeichnete Bedingungen erfüllt sind, d.h. wenn ein Schlingern erkannt wird. Wird ein Schlingern erkannt, so werden die Bremsdrücke $p_{VL}$, $p_{VR}$, $p_{HL}$, $p_{HL}$ für die Räder $R_{VR}$, $R_{VL}$, $R_{HR}$, $R_{HL}$ des Straßenfahrzeugs 1 mittels eines Bremsdruckberechners 42 gemäß dem in Fig. 8 beschriebenen Vorgehen ermittelt. Dem Bremsdruckberechner 42 sind dabei die Schritte 13 und 14 sowie, insofern implementiert, Schritt 16 und der Entscheidungsblock 15 zuzuordnen.

Alternativ zu der in Fig. 9 beschriebenen Schlingererkennung wird die Querbeschleunigung des Straßenfahrzeugs gemessen oder aus Meßwerten über die Raddrehzahlen hergeleitet. Die gemessene oder aus den Raddrehzahlen hergeleitete Querbeschleunigung wird einer Frequenzanalyse (beispielsweise einer Fourieranalyse) unterzogen. D.h., die entsprechende Größe wird in ihre einzelnen spektralen Bestandteile zerlegt. Anhand dieser spektralen Anteile kann überprüft werden, ob auch ein Anteil bei der für die Schlingerbewegung charakteristischen Frequenz vorliegt. Ist dies der Fall, so wird das im wesentliche periodische Giermoment eingeprägt.

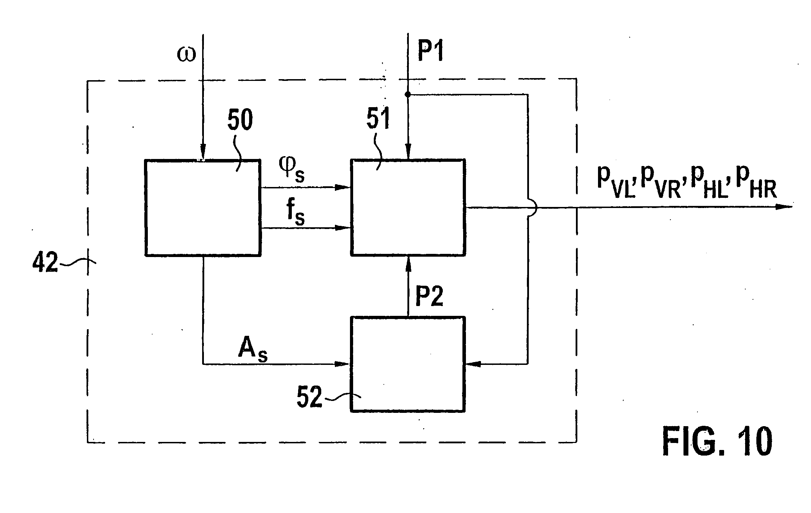

Fig. 10 zeigt den inneren Aufbau des Bremsdruckberechners 42. Dabei bezeichnet Bezugszeichen 50 einen Frequenzanalysator, der in Abhängigkeit der Querbeschleunigung $a_y$ und/oder der Giergeschwindigkeit $\omega$ die Frequenz $f_s$, die Phase $\varphi_s$ sowie die Amplitude $A_s$ der Schlingerbewegung ermittelt. Gemäß diesem Ausführungsbeispiel werden die Frequenz $f_s$, die Phase $\varphi_s$ sowie die Amplitude $A_s$ der Schlingerbewegung in Abhängigkeit der Giergeschwindigkeit $\omega$ ermittelt. In Abhängigkeit der Frequenz $f_s$ und der Phase $\varphi_s$ der Schlingerbewegung ermittelt ein Bremsdruckeinsteller 51, sofern das Signal P1 eine Schlingerbewegung anzeigt, die Bremsdrücke $p_{VL}$, $p_{VR}$, $p_{HL}$, $p_{HL}$ für die Räder $R_{VR}$, $R_{VL}$, $R_{HR}$, $R_{HL}$ des Straßenfahrzeugs 1 bzw. entsprechende Stellgrößen, die die Einstellung der Bremsdrücke $p_{VL}$, $p_{VR}$, $p_{HL}$, $p_{HL}$ in der Bremse 21 des Straßenfahrzeugs 1 bewirken. Die an den Rädern eingestellten Bremsdrücke ändern sich dabei entsprechend der Schlingerfrequenz $f_s$ (siehe Fig. 2, Fig. 5 und Fig. 6).

Dabei ist insbesondere vorgesehen, nur die Hinterräder, wie in Fig. 5 und 6 gezeigt, zu bremsen, wenn das Straßenfahrzeug 1 lediglich eine Antriebsschlupfregelung (ASR) oder eine Bremsschlupfregelung (ABS) aufweist. Weist das Straßenfahrzeug 1 dagegen eine Fahrdynamikregelung (FDR, ESP) auf, so werden vorteilhafterweiser alle Räder des Straßenfahrzeugs 1, gegebenenfalls individuell, gebremst, um das gegenphasige Giermoment einzuprägen. Einzelheiten bezüglich ABS, ASR, und FDR können z.B. dem Artikel "FDR - die Fahrdynamikreglung von Bosch", von A. van Zanten, R. Erhardt und G. Pfaff, ATZ Automobiltechnische Zeitschrift 96 (1994) 11 Seiten 674 bis 689 entnommen werden.

Im Falle einer erkannten Schlingerbewegung erfolgt die Aufbringung des im wesentlichen periodischen Giermomentes in besonders vorteilhafter Weise ausschließlich durch entsprechende Bremseneingriffe an den Hinterrädern. Eine entsprechende Beeinflussung der Vorderradbremsen führt nicht zu der gewünschten Stabilisierung des Anhängers bzw. Aufliegers. Können aufgrund der im Fahrzeug implementierten Schlupfreglung bzw. auf des Antriebskonzeptes des Fahrzeugs diese erfindungsgemäßen Bremseneingriffe nicht ausschließlich an den Hinterrädern durchgeführt werden, so werden alle Räder des Fahrzeuges gebremst, was zu einer Verzögerung des Zugfahrzeuges und somit auch des Aufliegers bzw. Anhängers und folglich zu einer Bestätigung der Auflaufbremse führt. Es ist insbesondere zwischen Bremsschlupfregelung (ABS), Antriebsschlupfregelung (ASR) sowie Fahrdynamikregelung (FDR) zu unterscheiden:

Bremsschlupfregelung (ABS):

Die klassische Bremsschlupfregelung ermöglicht nicht die Durchführung von fahrerunabhängigen Bremseneingriffen, mit denen der Bremsdruck im Radbremszylinder über den vom Fahrer eingestellten Vordruck hinaus erhöht werden kann bzw. mit denen überhaupt ein Bremsdruck aufgebaut werden kann. Ist das Fahrzeug mit solch einer Bremsschlupfregelung ausgestattet, so kann zur Stabilisierung des Fahrzeuggespannes lediglich eine Bremsung aller Räder durchgeführt werden. Dadurch wird, wie bereits ausgeführt, die Auflaufbremse aktiviert.

Alternativ ist auch der Einsatz einer Bremsschlupfregelung implementierbar, die mit einem pneumatischen Bremskraftverstärker ausgestattet ist. Im Falle eines erkannten Schlingerns wird der pneumatische Bremskraftverstärker aktiviert. Dadurch wird die Möglichkeit geschaffen, in die Radbremszylinder einen höheren Druck einzuspeisen, als es der vom Fahrer eingestellte Vordruck zulassen würde bzw. überhaupt einen Bremsdruck aufzubauen. Das im wesentliche periodische Giermoment wird durch Ansteuerung der den Radbremszylindern der Hinterräder zugeordneten Aktoren erzielt.

Eine Bremsschlupfregelung ist serienmäßig mit Raddrehzahlsensoren ausgestattet. Einen Querbeschleunigungssensor oder einen Gierratensensor weist sie für gewöhnlich nicht auf. D. h. in diesem Fall kann die gemessene Querbeschleunigung bzw. Gierrate nicht ausgewertet werden. Statt dessen wird in vorteilhafter Ausgestaltung unter Verwendung eines mathematischen Modells aus den Raddrehzahlen eine die Querbeschleunigung oder eine die Gierrate beschreibende Größe hergeleitet werden.

Anstelle der Querbeschleunigung bzw. der Gierrate kann auch die Differenz der Raddrehzahlen oder der Radgeschwindigkeiten der nicht angetriebenen Räder ausgewertet werden.

Antriebsschlupfregelung (ASR):

Mit einer Antriebsschlupfregelung wird an den Antriebsrädern des Fahrzeuges das Vortriebsmoment beeinflußt. Dies erfolgt durch Bremseneingriffe, mit denen unabhängig vom Fahrer Bremsdruck eingespeist wird, bzw. durch Motoreingriffe, mit denen Motormoment zurückgenommen wird.

Ist das Fahrzeug mit einer Antriebsschlupfregelung ausgestattet, so ist in Hinsicht auf das erfindungsgemäße Verfahren bzw. die erfindungsgemäße Vorrichtung das Antriebskonzept von Bedeutung. Handelt es sich um ein Fahrzeug mit Heckantrieb bzw. mit Allradantrieb, so kann das im wesentlichen periodische Giermoment an der Hinterachse, welches zur Stabilisierung des Fahrzeuggespannes erforderlich ist, eingeprägt werden. Handelt es sich dagegen um ein frontgetriebenes Fahrzeug, so besteht diese Möglichkeit der Stabilisierung nicht. In diesem Fall können lediglich sämtliche Räder des Fahrzeuges gebremst werden, was zu einer Aktivierung der Auflaufbremse führt. Bezüglich der Sensorik gelten die zur Bremsschlupfregelung gemachten Ausführungen.

Fahrdynamikregelung (FDR, ESP):

Bei einem Fahrzeug, welches mit einer Fahrdynamikregelung ausgestattet ist, können alle Räder einzeln und unabhängig vom Fahrer gebremst werden, d.

h. es kann auch der Bremsdruck über den Fahrervordruck hinaus erhöht bzw. aufgebaut werden, um das im wesentliche periodische Giermoment einzuprägen. Darüber hinaus können auch alle Räder gleichzeitig gebremst werden, so daß dadurch die Auflaufbremse aktiviert wird. Ferner besteht bei der Fahrdynamikregelung die Möglichkeit, durch Motoreingriffe Motorleistung zu reduzieren, und somit ebenfalls die Auflaufbremse zu aktivieren.

In diesem Fall kann, da jeweils ein entsprechender Sensor vorhanden ist, die gemessene Querbeschleunigung bzw. Gierrate ausgewertet werden.

Der Frequenzanalysator 50 ist dem Schritt 13 und der Bremsdruckeinsteller 51 dem Schritt 14 zuzuordnen. Der Bremsdruckberechner 42 weist zudem eine Amplitudenüberwachung 52 auf, mittels der überwacht wird, ob sich die Amplitude $A_s$ der Schlingerbewegung durch Bremsen gemäß Schritt 14 vermindert hat. Die Amplitudenüberwachung 52 gibt ein Signal P2 aus, das den Wert 0 annimmt, wenn sich die Amplitude der Schlingerbewegung nicht verringert und den Wert 1, wenn sich die Amplitude $A_s$ der Schlingerbewegung verringert. Der Amplitudenüberwachung 52 ist der Entscheidungsblock 15 in Fig. 8 zuzuordnen. Dem Bremsdruckeinsteller 51 ist somit auch der Schritt 16 in Fig. 8 zuzuordnen.

Mit Blick auf die Durchführung der Bremseneingriffe zur Einprägung des Giermomentes sei abschließend folgendes bemerkt: In den vorstehenden Ausführungen wurde davon ausgegangen, daß der Anhänger lediglich über eine Auflaufbremse und nicht über den Rädern zugeordnete Bremsen verfügt. Für den Fall, daß auch der Anhänger über den Rädern zugeordnete Bremsen verfügt, ergeben sich bezogen auf die Eingriffe in die Bremsen weitere Eingriffsmöglichkeiten. So können die Bremsen des Zugfahrzeuges oder die des Anhängers entweder in Alleinstellung oder aber auch gemeinsam wie vorstehend ausgeführt angesteuert werden. Entsprechendes gilt auch für einen Auflieger.

**Patentansprüche**

1.  Verfahren zum Stabilisieren eines Straßenfahrzeugs (1), insbesondere eines Personenkraftwagens, mit einem durch das Straßenfahrzeug (1) gezogenen Anhänger (2), wobei
das Straßenfahrzeug (1) in bezug auf Schlingerbewegungen überwacht wird und dem Straßenfahrzeug (1) beim Erkennen einer Schlingerbewegung automatisch ein im wesentlichen periodisches Giermoment eingeprägt wird, das der Schlingerbewegung im wesentlichen gegenphasig ist (14),
**dadurch gekennzeichnet,**
**dass** zur Einprägung des Giermoments auf beiden Seiten des Straßenfahrzeugs (1) unterschiedliche Bremskräfte eingeprägt werden.

2.  Verfahren nach Anspruch 1,

**dadurch gekennzeichnet,**
**daß** das Einprägen des im wesentlichen periodisches Giermoments durch automatisches einseitiges Abbremsen des Fahrzeugs erfolgt.

3. Verfahren nach Anspruch 1 oder 2,
**dadurch gekennzeichnet,**
**daß** ein Einprägen des im wesentlichen periodisches Giermoments nur dann erfolgt, wenn eine Querbeschleunigung(ay) und/oder eine Giergeschwindigkeit (ω) vorhanden ist, die nicht auf Lenkbewegungen durch den Fahrer zurückgehen.

4. Verfahren nach Anspruch 1, 2 oder 3, wobei der Anhänger (2) eine Auflaufbremse aufweist,
**dadurch gekennzeichnet,**
**daß** das Straßenfahrzeug (1) zusätzlich automatisch kurzzeitig derart abgebremst wird, daß die Auflaufbremse des Anhängers (2) ausgelöst wird.

5. Verfahren nach Anspruch 1, 2, 3 oder 4, wobei der Anhänger (2) eine Auflaufbremse aufweist,
**dadurch gekennzeichnet,**
**daß** das Straßenfahrzeug (1) nach Einprägen des Giermoments automatisch kurzzeitig derart abgebremst wird, daß die Auflaufbremse des Anhängers (2) ausgelöst wird.

6. Verfahren nach Anspruch 4 oder 5,
**dadurch gekennzeichnet,**
**daß** das automatische kurzzeitige Abbremsen zum Auslösen der Auflaufbremse des Anhängers (2) durch Verringerung des Antriebsmomentes eines das Straßenfahrzeug (1) antreibenden Motors erfolgt.

7. Verfahren nach Anspruch 6,
**dadurch gekennzeichnet,**
**daß** das kurzzeitige automatische Abbremsen des Straßenfahrzeugs (1) in einem Nulldurchgang der Schlingerbewegung erfolgt.

8. Verfahren nach Anspruch 6 oder 7,
**dadurch gekennzeichnet,**
**daß** das kurzzeitige automatische Abbremsen des Straßenfahrzeugs (1) nur dann erfolgt, wenn das Einprägen des Giermoments zu einer Verringerung der Schlingerbewegung geführt hat.

9. Verfahren nach einem der vorhergehenden Ansprüche,
**dadurch gekennzeichnet,**
**daß** die Geschwindigkeit des Straßenfahrzeugs (1) derart reduziert wird, daß sie kleiner ist als eine kritische Geschwindigkeit.

10. Verfahren nach einem der vorhergehenden Ansprüche,

**dadurch gekennzeichnet,**
**daß** wird das Straßenfahrzeug (1) automatisch kurzzeitig beschleunigt wird.

11. Stabilisierungseinrichtung zum Stabilisieren eines Straßenfahrzeugs (1), insbesondere eines Personenkraftwagens, mit einem Anhänger (2) gemäß einem Verfahren nach einem der vorhergehenden Ansprüche, wobei
die Stabilisierungseinrichtung Mittel (20) zum Erkennen einer Schlingerbewegung des Straßenfahrzeugs (1) sowie zum Einprägen eines im wesentlichen periodischen Giermoments auf das Straßenfahrzeug (1) bei Erkennen einer Schlingerbewegung aufweist, wobei das Giermoment der eingeprägten Schlingerbewegung im wesentlichen gegenphasig ist (14),
**dadurch gekennzeichnet,**
**dass** zur Einprägung des Giermoments auf beiden Seiten des Straßenfahrzeugs (1) unterschiedliche Bremskräfte eingeprägt werden.

## Claims

1. Method for stabilizing a road vehicle (1), in particular a passenger vehicle, having a trailer (2) which is towed by the road vehicle (1), wherein
the road vehicle (1) is monitored with regard to rolling movements, and an essentially periodic yaw moment is automatically applied to the road vehicle (1) when a rolling movement is detected, said yaw moment being essentially in antiphase (14) to the rolling movement,
**characterized**
**in that** different braking forces are applied on each side of the road vehicle (1) in order to apply the yaw moment.

2. Method according to Claim 1,
**characterized**
**in that** the essentially periodic yaw moment is applied by means of automatic single-sided braking of the vehicle.

3. Method according to Claim 1 or 2,
**characterized**
**in that** the essentially periodic yaw moment is only applied when a lateral acceleration (ay) and/or a yaw rate (ω) are present which are not attributable to steering movements by the driver.

4. Method according to Claim 1, 2 or 3, the trailer (2) having an overrun brake,
**characterized**
**in that** the road vehicle (1) is additionally automatically braked momentarily in such a way that the overrun brake of the trailer (2) is triggered.

**5.** Method according to Claim 1, 2, 3 or 4, the trailer (2) having an overrun brake,
**characterized**
**in that**, after the yaw moment is applied, the road vehicle (1) is automatically braked momentarily in such a way that the overrun brake of the trailer (2) is triggered.

**6.** Method according to Claim 4 or 5,
**characterized**
**in that** the automatic, momentary braking for triggering the overrun brake of the trailer (2) is carried out by reducing the drive torque of an engine which drives the road vehicle (1).

**7.** Method according to Claim 6,
**characterized**
**in that** the momentary automatic braking of the road vehicle (1) takes place at a zero crossing of the rolling movement.

**8.** Method according to Claim 6 or 7,
**characterized**
**in that** the momentary automatic braking of the road vehicle (1) only takes place when the application of the yaw moment has led to a reduction in the rolling movement.

**9.** Method according to one of the preceding claims,
**characterized**
**in that** the speed of the road vehicle (1) is reduced in such a way that it is lower than a critical speed.

**10.** Method according to one of the preceding claims,
**characterized**
**in that** the road vehicle (1) is automatically accelerated momentarily.

**11.** Stabilizing device for stabilizing a road vehicle (1), in particular a passenger vehicle, having a trailer (2) in accordance with a method according to one of the preceding claims, wherein
the stabilizing device has means (20) for detecting a rolling movement of the road vehicle (1) and for applying an essentially periodic yaw moment to the road vehicle (1) when a rolling movement is detected, the yaw moment being essentially in antiphase (14) to the rolling movement,
**characterized**
**in that** different braking forces are applied on each side of the road vehicle (1) in order to apply the yaw moment.

**Revendications**

**1.** Procédé pour stabiliser un véhicule routier (1), notamment une voiture particulière, dans le cas où une remorque (2) est tractée par le véhicule routier (1), selon lequel on surveille des mouvements de roulis du véhicule routier (1) et, au cas où un mouvement de roulis est détecté, un couple de lacet essentiellement périodique est automatiquement appliqué au véhicule routier (1), le couple de lacet étant essentiellement en opposition de phase (14) avec le mouvement de roulis,
**caractérisé en ce que**
pour appliquer le couple de lacet, on applique des forces de freinage différentes des deux côtés du véhicule routier (1).

**2.** Procédé selon la revendication 1,
**caractérisé en ce que**
l'application du couple de lacet essentiellement périodique a lieu par ralentissement automatique unilatéral du véhicule.

**3.** Procédé selon la revendication 1 ou 2,
**caractérisé en ce que**
l'application du couple de lacet essentiellement périodique n'a lieu qu'en présence d'une accélération transversale (ay) et/ou d'une vitesse de mise en lacet ($\omega$) non imputables à des mouvements de direction effectués par le conducteur.

**4.** Procédé selon la revendication 1, 2 ou 3, pour lequel la remorque (2) présente un dispositif de freinage à inertie,
**caractérisé en ce que**
le véhicule routier (1) subit en outre un bref ralentissement automatique de telle sorte que le dispositif de freinage à inertie de la remorque (2) se déclenche.

**5.** Procédé selon la revendication 1, 2, 3 ou 4, pour lequel la remorque (2) présente un dispositif de freinage à inertie,
**caractérisé en ce que**
le véhicule routier (1) subit en outre un bref ralentissement automatique après application du couple de lacet de telle sorte que le dispositif de freinage à inertie de la remorque (2) se déclenche.

**6.** Procédé selon la revendication 4 ou 5,
**caractérisé en ce que**
le bref ralentissement automatique visant à déclencher le dispositif de freinage à inertie de la remorque (2) se produit par réduction du couple de traction d'un moteur entraînant le véhicule routier (1).

**7.** Procédé selon la revendication 6,
**caractérisé en ce que**
le bref ralentissement automatique du véhicule routier (1) se produit lors d'un passage par zéro du mouvement de roulis.

**8.** Procédé selon la revendication 6 ou 7,

**caractérisé en ce que**
le bref ralentissement automatique du véhicule routier (1) ne se produit que lorsque l'application du couple de lacet a conduit à une réduction du mouvement de roulis.

9. Procédé selon l'une des revendications précédentes,
   **caractérisé en ce que**
   la vitesse du véhicule routier (1) est réduite pour être inférieure à une vitesse critique.

10. Procédé selon l'une des revendications précédentes,
    **caractérisé en ce que**
    le véhicule routier (1) subit automatiquement une brève accélération.

11. Dispositif de stabilisation pour stabiliser un véhicule routier (1), notamment une voiture particulière ayant une remorque (2), suivant un procédé selon l'une des revendications précédentes, dans lequel le dispositif de stabilisation présente des moyens (20) pour détecter un mouvement de roulis du véhicule routier (1) ainsi que pour appliquer un couple de lacet essentiellement périodique au véhicule routier (1) lorsqu'un mouvement de roulis a été détecté, le couple de lacet appliqué étant essentiellement en opposition de phase (14) avec le mouvement de roulis,
    **caractérisé en ce que**
    pour appliquer le couple de lacet, on applique des forces de freinage différentes des deux côtés du véhicule routier (1).

FIG. 1

S

**FIG. 2**

t

$a_Y, \omega$

**FIG. 3**

t

v

$v_{HR}$

$v_F$

$v_{HL}$

≈

**FIG. 4**

t

$p_{HR}$

**FIG. 5**

t

$p_{HL}$

**FIG. 6**

t

FIG. 7

$p_{VL}, p_{VR}, p_{HL}, p_{HR}$

$\delta$

$v_F$

$\omega$

$a_Y$

20

21

22

23

24

25

FIG. 8

FIG. 9

FIG. 10

EP 1 107 893 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4127750 C1

### In der Beschreibung aufgeführte Nicht-Patentliteratur

- **von A. van Zanten ; R. Erhardt ; G. Pfaff.** FDR - die Fahrdynamikreglung von Bosch. *ATZ Automobiltechnische Zeitschrift,* 1994, vol. 96 (11), 674-689
- **von F. Hecker ; S. Hummel ; O. Jundt ; K.-D. Leimbach ; I. Faye ; H. Schramm.** *Vehicle Dynamics Controler for Commercial Vehicles*
- **von A. van Zanten ; R. Erhardt ; G. Pfaff.** FDR - die Fahrdynamikreglung von Bosch. *ATZ Automobiltechnische Zeitschrift,* 1994, vol. 96 (11), 674-689
- **A. van Zanten ; R. Erhardt ; G. Pfaff.** FDR - Die Fahrdynamikregelung von Bosch. *ATZ Automobiltechnische Zeitschrift,* 1994, vol. 96 (11), 674-689
- **von A. van Zanten ; R. Erhardt ; G. Pfaff.** FDR - Die Fahrdynamikregelung von Bosch. *ATZ Automobiltechnische Zeitschrift,* 1994, vol. 96 (11), 674-689